# FASCICULE DE BREVET EUROPEEN

(11) **EP 2 079 138 B1**
(45) Date de publication et mention de la délivrance du brevet: **30.08.2017**
(21) Numéro de dépôt: 08291187.6
(22) Date de dépôt: 15.12.2008
(51) Int. Cl.: H02G 3/12, H02G 3/04

(54) **Accessoire pour goulotte électrique, ensemble électrique comprenant un appareillage électrique et un tel accessoire et ensemble électrique comprenant une goulotte électrique et un tel accessoire**
Zubehör für elektrischen Kabelkanal, Elektroeinheit, die ein Elektrogerät und ein solches Zubehörteil umfasst, sowie Elektroeinheit, die einen elektrischen Kabelkanal und ein solches Zubehörteil umfasst
Accessory for electric raceways, electric assembly comprising electrical switchgear and such an accessory and electric assembly comprising an electric raceway and such an accessory

(30) Priorité: 14.01.2008 FR 0800191
(43) Date de publication de la demande: 15.07.2009
(73) Titulaire: Legrand France, 87000 Limoges (FR)
(72) Inventeur: Gautier, Bruno, 72000 Le Mans (FR)
(74) Mandataire: Orsini, Fabienne

(56) Documents cités:
- EP-A- 0 957 551
- EP-A- 1 320 163
- EP-A- 1 780 852
- DE-A1- 2 204 221
- DE-U1- 29 909 946

## Description

### DOMAINE TECHNIQUE AUQUEL SE RAPPORTE L'INVENTION

La présente invention concerne de manière générale les accessoires pour goulottes électriques, tels que, par exemple, des accessoires de renfort à placer à côté d'appareillages électriques rapportés directement sur un socle de goulotte ou encore des accessoires de jonction destinés à établir la jonction entre les extrémités coupées de deux tronçons de couvercle rapportés dans l'ouverture longitudinale d'un socle de goulotte.

Elle concerne plus particulièrement un accessoire à rapporter en travers d'une ouverture longitudinale d'un socle d'une goulotte, qui comprend deux parties, à savoir un support et un cache à monter sur le support, ledit support comportant, sur chacun de ses deux côtés transversaux parallèles, une patte portant extérieurement au moins une dent d'encliquetage adaptée à s'encliqueter sur le socle.

### ARRIERE-PLAN TECHNOLOGIQUE

On connaît déjà du document FR 2 756 431, un accessoire d'immobilisation rigide du type précité qui, rapporté sur un socle d'une goulotte de manière adjacente à un appareillage électrique monté directement dans le socle, bloque ledit appareillage électrique en translation selon la direction longitudinale du socle et rigidifie localement les ailes latérales longitudinales du socle pour éviter tout écartement de celles-ci lors des branchements et débranchements sur ledit appareillage électrique.

Dans cet accessoire d'immobilisation, le cache est une pièce séparée du support.

Une fois que le support est monté directement sur le socle, en travers de son ouverture longitudinale, le cache est simplement encliqueté sur le support pour coiffer sa face avant.

En outre, le cache comprend sur ses deux côtés longitudinaux parallèles, deux bords tombants qui prennent appui contre le support.

Ainsi, lorsqu'il est en position sur le support accroché au socle de la goulotte, le cache vient s'aligner, d'une part, dans le plan d'un tronçon de couvercle encliqueté sur le socle pour fermer son ouverture longitudinale, et, d'autre part, dans le plan de l'enjoliveur de l'appareillage électrique monté directement dans ce socle.

Le fait que, avant le montage de l'accessoire sur le socle de la goulotte, le cache soit une pièce séparée du support, est une source de problème d'approvisionnement ou de perte sur le chantier de l'installation électrique.

En outre le document EP 1 780 852 décrit un accessoire à monter transversalement dans l'ouverture longitudinale d'un socle de goulotte. Cet accessoire comporte un support et un cache rapporté sur le support par l'intermédiaire d'un bras de liaison flexible dont une extrémité libre est engagée dans une rainure prévue longitudinalement dans la partie rigide du support qui forme un pont entre les deux pattes prévues sur les côtés transversaux parallèles de celui-ci.

Enfin, on connaît des documents DE29909946, DE2204221, EP1320163 et EP0957551, d'autres accessoires pour goulottes électriques. Le document EP0957551 concerne une agrafe qui comporte un corps s'étendant transversalement à l'axe longitudinal de la goulotte d'une aile latérale à l'autre du socle de goulotte. Ce corps forme un pont qui retient les câbles conducteurs à l'intérieur dudit socle. Le document DE2204221 concerne un couvercle de goulotte. Les documents EP1320163 et DE29909946 concernent un accessoire de renfort à rapporter en travers d'une ouverture longitudinale d'un socle d'une goulotte, qui comprend un support et un cache séparé du support, à monter sur ce dernier.

### OBJET DE L'INVENTION

Pour remédier à l'inconvénient précité, la présente invention propose un accessoire tel que défini dans la revendication 1.

Avantageusement, grâce à l'invention, le cache lié en permanence au support de l'accessoire est imperdable. En outre, une fois que le support est accroché au socle par ses dents d'encliquetage, lorsque le cache est monté sur le support afin d'en recouvrir la face avant, chaque bras de liaison se déforme élastiquement et pousse vers l'extérieur la dent d'encliquetage portée par la patte du support à laquelle il est lié pour la verrouiller sur le socle.

D'autres caractéristiques avantageuses et non limitatives de l'accessoire selon l'invention sont énoncées dans les revendications 2 à 36.

Enfin, l'invention concerne un ensemble électrique comprenant, d'une part, une goulotte avec un socle présentant une ouverture longitudinale munie de deux bandes de clipsage aptes à permettre le montage direct d'accessoires et d'appareillages électriques, ainsi que de moyens d'immobilisation prévus sur une partie intérieure du socle, et, d'autre part, un accessoire selon l'invention à monter dans ladite ouverture longitudinale sur les bandes de clipsage du socle, dont les moyens d'immobilisation sont adaptés à coopérer avec lesdits moyens d'immobilisation du socle de la goulotte.

D'autres caractéristiques de cet ensemble électrique conforme à l'invention sont énoncées dans les revendications 38 à 57.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un premier côté d'un premier mode de réalisation d'un accessoire selon l'invention ;
- la figure 2A est une vue schématique en perspective d'un deuxième côté opposé de l'accessoire de la figure 1 ;
- la figure 2B est une vue schématique de côté d'une première variante de réalisation de l'accessoire selon l'invention ;
- la figure 3 est une vue schématique de côté de l'accessoire de la figure 1 ;
- la figure 4 est une vue schématique en perspective de trois quarts d'une seconde variante de réalisation de l'accessoire selon l'invention ;
- la figure 5 est une vue schématique de côté de l'accessoire de la figure 4 ;
- la figure 6 est une vue schématique de côté d'une troisième variante de réalisation de l'accessoire selon l'invention ;
- la figure 7 est une vue schématique de côté d'une quatrième variante de réalisation de l'accessoire selon l'invention ;
- les figures 8A et 8B montrent la mise en place de l'accessoire de la figure 1 dans l'ouverture longitudinale d'un socle d'une goulotte ;
- les figures 9A et 9B montrent la mise en place de l'accessoire de la figure 4 dans l'ouverture longitudinale d'un socle d'une goulotte d'un ensemble électrique selon l'invention ;
- les figures 10A et 10B montrent la mise en place de l'accessoire de la figure 6 dans l'ouverture longitudinale d'un socle d'une goulotte d'un ensemble électrique selon l'invention ;
- les figures 11A et 11B sont des vues en perspective de deux côtés opposés d'un appareillage électrique d'un ensemble électrique selon l'invention ;
- la figure 12 est une vue de dessus d'un ensemble électrique selon l'invention à l'état de livraison avant montage sur le socle de la goulotte, comprenant l'appareillage électrique des figures 11A et 11B auquel sont appariés deux accessoires de la figure 2B ;
- la figure 13 est une vue en coupe selon le plan A-A de la figure 13 ;
- la figure 14 est une loupe du détail B de la figure 13 ;
- la figure 15 est une vue de dessus de l'ensemble électrique de la figure 12 mis en position dans l'ouverture longitudinale d'un socle d'une goulotte ;
- la figure 16 est une vue en coupe selon le plan A-A de la figure 15 ;
- la figure 17 est une loupe du détail C de la figure 16 ; et
- les figures 18A à 19C sont des vues partielles de détail de différents modes de réalisation du socle de la goulotte de l'ensemble électrique selon l'invention.

En préliminaire, on notera que les parties similaires ou identiques des différents modes de réalisation de l'invention, représentés sur les différentes figures, seront, dans la mesure du possible, référencées par les mêmes signes de référence et ne seront pas systématiquement décrites à chaque fois.

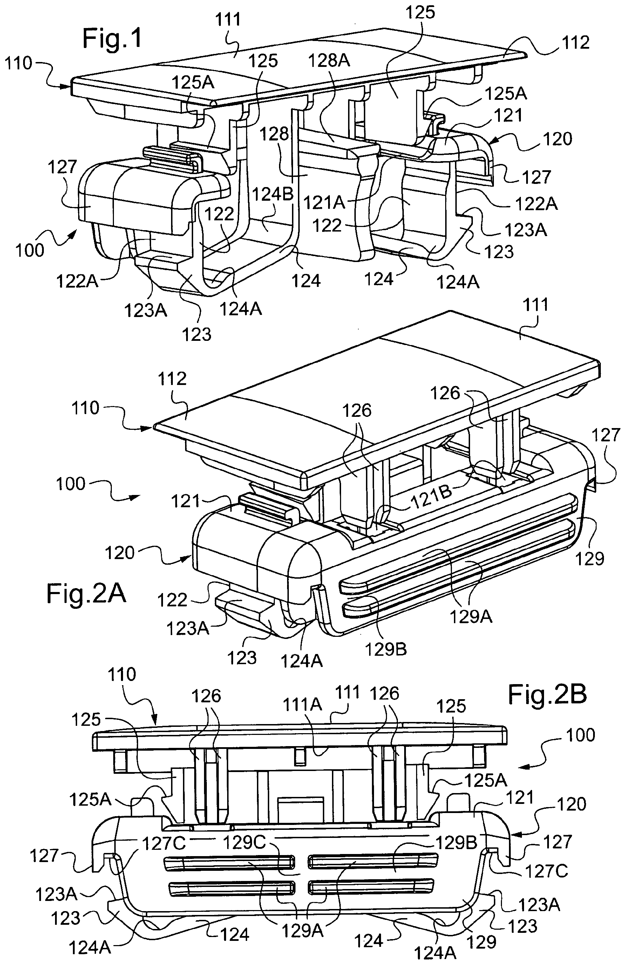

Sur les figures 1 à 17, on a représenté un accessoire 100 à rapporter en travers d'une ouverture longitudinale 1A d'un socle 1 d'une goulotte électrique.

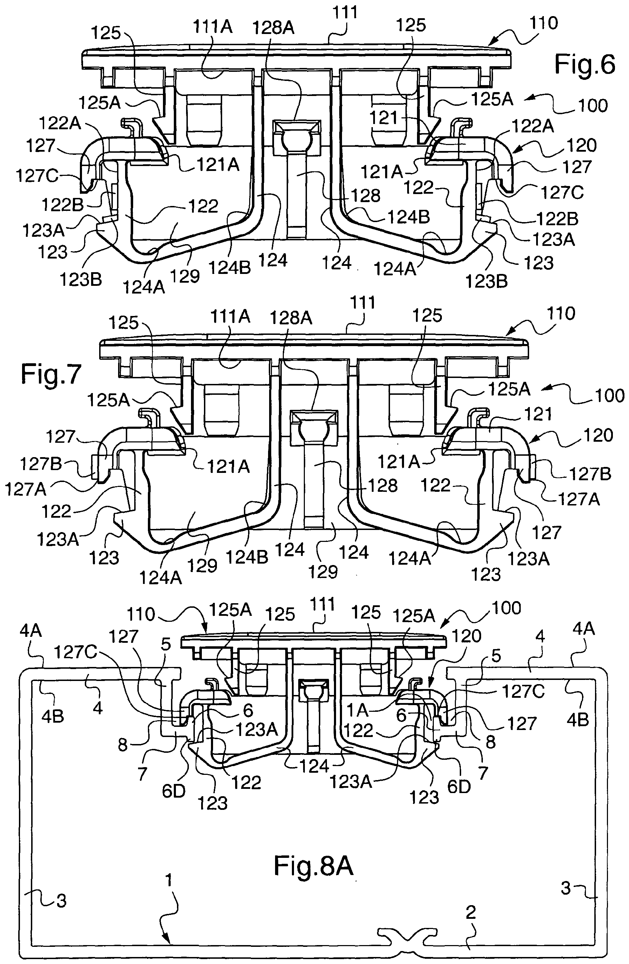

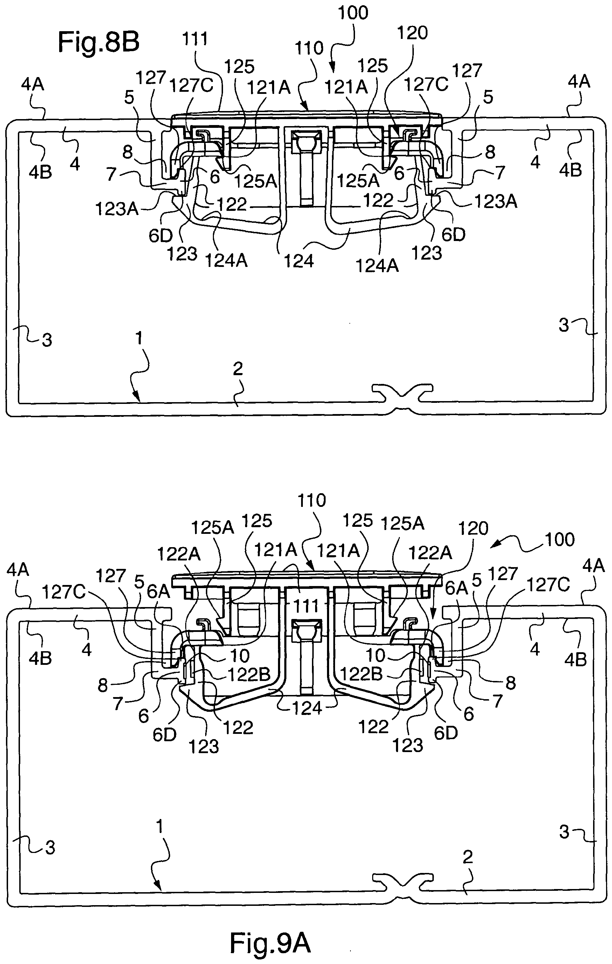

Comme le montrent plus particulièrement les figures 8A et 8B, classiquement, une goulotte électrique comporte un profilé, appelé socle 1, avec un fond 2 et deux ailes latérales longitudinales 3 entre lesquelles sont définis une ouverture longitudinale 1A ainsi qu'un espace de réception de divers câbles et appareillages électriques.

Ici, le socle 1 présente une section en U et ses deux ailes latérales longitudinales 3 sont parallèles mais, en variante, il peut présenter une toute autre forme de section et, en particulier, une section en V avec deux ailes latérales qui divergent l'une par rapport à l'autre à partir du fond.

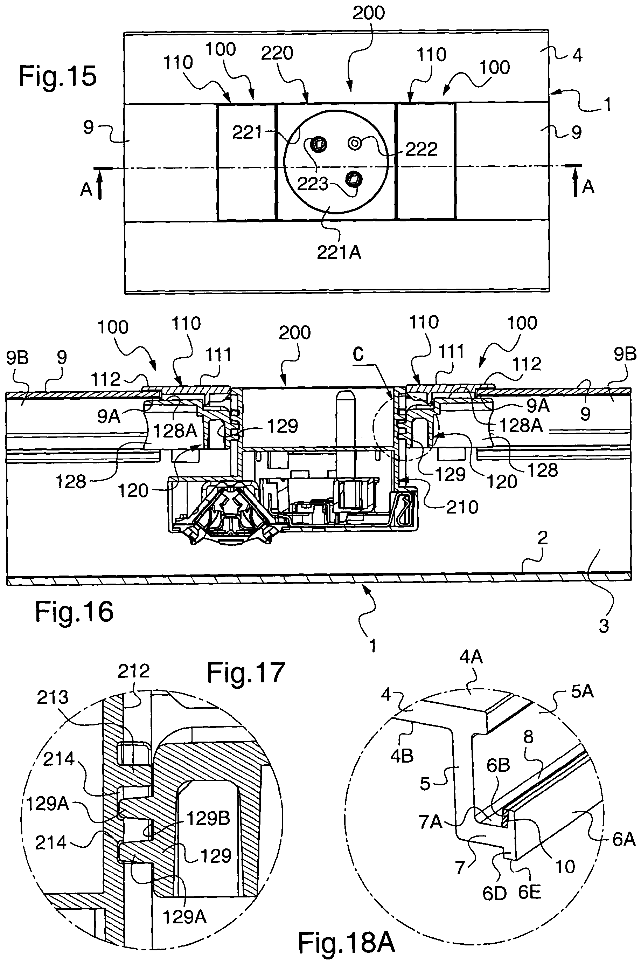

L'ouverture longitudinale 1A est fermée par des tronçons de couvercle 9 qui comprennent des pattes 9B de montage sur des aménagements du socle 1 (voir figure 16).

Les deux ailes latérales longitudinales 3 du socle 1 comprennent des retours 4, dirigés l'un vers l'autre, qui s'étendent sensiblement dans le même plan que les tronçons de couvercle 9.

L'ouverture longitudinale 1A du socle 1 est bordée par deux parois longitudinales rentrantes 5, parallèles entre elles et aussi parallèles aux deux ailes latérales longitudinales 3 du socle 1. Chaque paroi rentrante 5 est rattachée à la face arrière 4B d'un retour 4, à proximité d'un bord libre du retour 4, en étant perpendiculaire à celui-ci. Chaque paroi rentrante 5 s'étend donc à l'intérieur du socle 1 sous le retour 4 correspondant, parallèlement aux deux ailes latérales longitudinales 3 du socle 1.

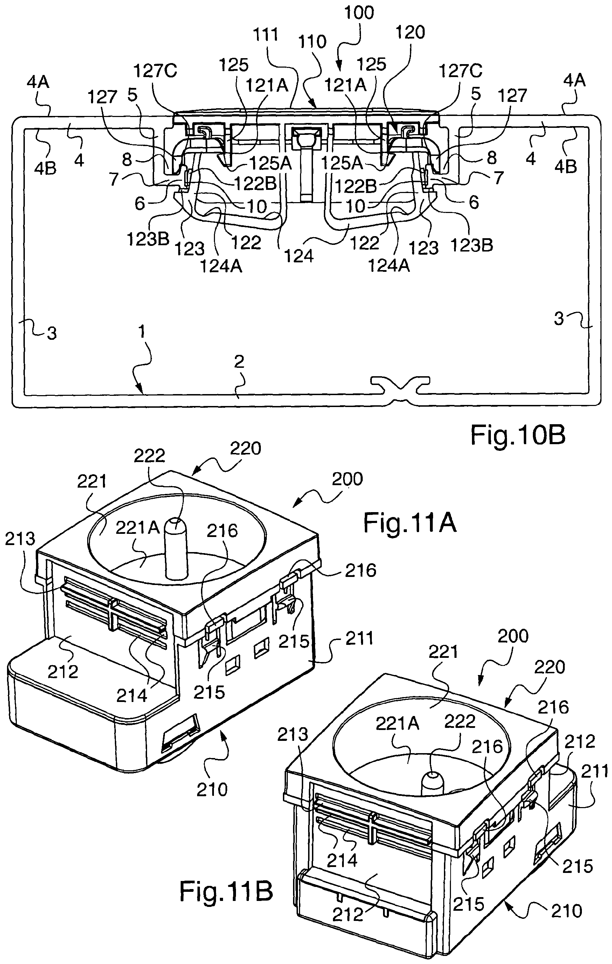

L'ouverture longitudinale 1A définie ci-dessus est munie de deux bandes de clipsage aptes à permettre le montage des tronçons de couvercle 9 ainsi que le montage d'un appareillage électrique 200 du type de celui représenté sur les figures 11A et 11B.

Plus précisément, comme le montrent les figures 8A et 8B, chaque bande de clipsage comporte ici une aile longitudinale 6 rattachée par une entretoise 7 à l'extrémité intérieure libre de la paroi rentrante 5 correspondante.

Chaque aile longitudinale 6 et chaque entretoise 7 associée sont situées à l'intérieur du socle 1 à distance de la face arrière 4B du retour 4 correspondant du socle 1.

Chaque entretoise 7 définit avec l'aile longitudinale 6 et la paroi rentrante 5 correspondante, une gorge longitudinale 8 ouverte vers l'avant du socle 1.

Selon les exemples représentés sur les différentes figures, chaque aile longitudinale 6 comporte un talon 6D qui s'étend vers le fond 2 du socle 1 sous chaque gorge longitudinale 8. Chaque talon 6D forme un rebord d'accrochage pour des moyens d'encliquetage prévus sur chaque tronçon de couvercle 9 ou sur l'appareillage électrique 200.

Toutefois, selon une variante non représentée, on peut prévoir que chaque aile longitudinale 6 ne comporte pas de talon et s'arrête au ras de la face arrière de l'entretoise 7 correspondante. La face arrière de chaque entretoise forme alors une face d'accrochage pour des moyens d'encliquetage prévus sur chaque tronçon de couvercle 9 ou sur l'appareillage électrique 200.

Chaque tronçon de couvercle 9 porte perpendiculairement sur sa face arrière, en parallèle, le long de chacun de ses deux bords longitudinaux, d'une part, une rangée de pattes d'engagement 9B destinées à s'engager dans la gorge longitudinale 8 correspondante du socle 1, et, d'autre part, une rangée de pattes d'encliquetage destinées à s'accrocher sous ladite gorge longitudinale 8. Dans le cas particulier représenté, les pattes d'encliquetage du tronçon de couvercle 9 s'accrochent au talon 6D de l'aile longitudinale 6 de la bande de clipsage correspondante du socle 1.

Lorsque chaque tronçon de couvercle 9 est monté sur le socle 1, sa face avant s'étend à effleurement de la face avant 4A des retours 4 du socle 1.

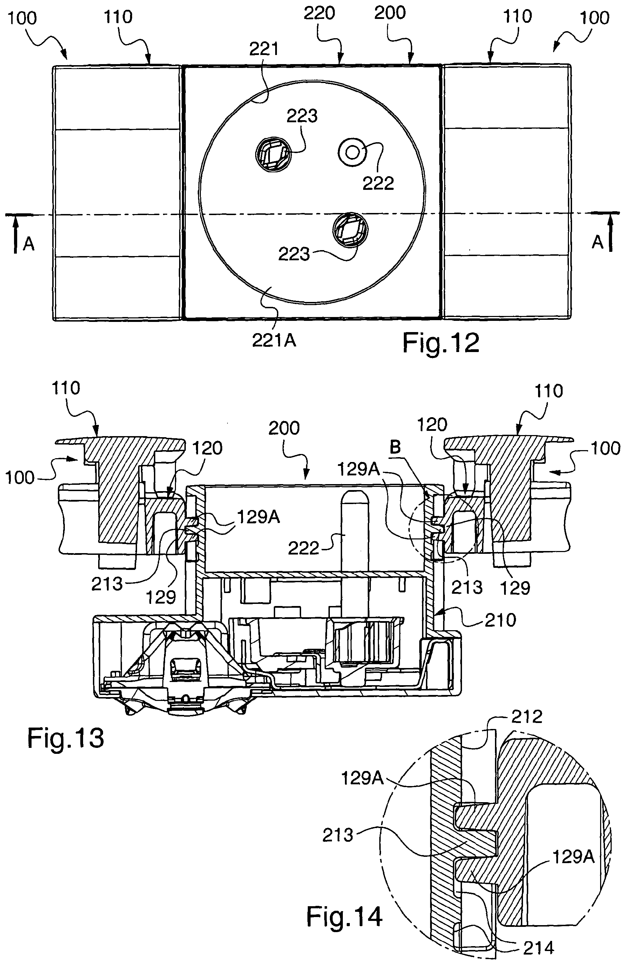

L'appareillage électrique 200 représenté sur les figures 11A, 11B et 13 est ici une prise de courant. Il comprend un socle 210 et un enjoliveur 220 monté sur le socle 210. Un bornier est prévu sur un côté du socle 210 pour l'alimentation électrique du mécanisme d'appareillage par des conducteurs électriques provenant du réseau électrique et courant dans le fond du socle 1.

L'enjoliveur 220 définit un puits d'insertion d'une fiche électrique (non représentée). Ce puits d'insertion est délimité par une paroi cylindrique 221 et une paroi de fond 221A percée de deux trous donnant accès aux alvéoles 223 des bornes électriques de phase et de neutre du mécanisme d'appareillage. La paroi de fond 221A de ce puits est également percée d'un troisième trou au travers duquel émerge dans ledit puits une broche de terre 222 reliée électriquement à la borne de terre du mécanisme d'appareillage.

Avantageusement, le socle 210 de l'appareillage électrique 200 porte, en saillie, sur deux faces latérales 211 opposées, d'une part, des dents d'accrochage 215 destinées à s'accrocher sous les gorges longitudinales 8 du socle 1, et, d'autre part, des languettes 216 destinées à prendre appui sur le bord libre avant des ailes longitudinales 6 des bandes de clipsage dudit socle 1. Dans le cas particulier représenté, les dents d'accrochage 215 du socle 210 de la prise de courant s'accrochent au talon 6D de l'aile longitudinale 6 de la bande de clipsage correspondante du socle 1.

Une fois que le socle 210 de l'appareillage électrique 200 est encliqueté sur les bandes de clipsage du socle 1 au moyen de ses dents d'accrochage 215, les languettes 216, qui prennent appui sur le bord libre avant des ailes longitudinales 6 des bandes de clipsage du socle, évitent lors d'un choc que l'appareillage électrique 200 s'enfonce dans le fond dudit socle. Ces languettes 216 forment alors des moyens anti-enfoncement de l'appareillage électrique 200.

Ainsi, l'appareillage électrique 200 est dit « à clipsage direct » sur le socle 1, dans la mesure où il vient s'encastrer, sans mise en oeuvre d'un moyen de fixation particulier, dans l'ouverture longitudinale 1A du socle 1 à l'emplacement choisi par l'installateur. Comme le montre plus particulièrement la figure 16, l'enjoliveur 220 de l'appareillage électrique 200 vient fermer localement ladite ouverture longitudinale 1A du socle 1 en s'étendant en largeur d'un bord longitudinal à l'autre de celle-ci, sensiblement dans le même plan que les tronçons de couvercle 9. Ainsi, la face avant de l'enjoliveur 220 s'étend à effleurement de la face avant 4A des retours 4 du socle 1.

La flexibilité naturelle du socle 1 peut conduire, en cas de contrainte, à un écartement local des deux parois latérales longitudinale 3 du socle 1, c'est-à-dire à un élargissement local de l'ouverture longitudinale 1A, préjudiciable à la bonne tenue de l'appareillage électrique 200 sur le socle 1.

C'est pour cela que, avantageusement, on prévoit, un accessoire 100, appelé accessoire de renfort, mis en place dans l'ouverture longitudinale 1A du socle 1, au travers de celle-ci, à proximité de l'appareillage électrique 200, pour empêcher, au moins localement, l'écartement de ladite ouverture longitudinale 1A. Pour obtenir ce résultat, il suffit d'un seul accessoire de renfort 100 installé à côté de l'appareillage électrique 200 mais il est préférable d'en disposer deux de part et d'autre de celui-ci, comme cela est représenté sur les figures 15 et 16.

Comme le montrent les figures 1 à 7, l'accessoire 100 se présente sous la forme d'une traverse qui comporte deux parties 110,120, à savoir un support 120 et un cache 110 à monter sur ledit support 120.

Le support 120 comprend, sur chacun de ses deux côtés transversaux parallèles, une patte 122 portant extérieurement ici une dent d'encliquetage 123 adaptée à s'encliqueter sur le socle 1.

Plus précisément, le support 120 comporte un corps 121 plat qui porte les deux pattes 122 à proximité de chacun de ses côtés transversaux. Ces pattes 122 s'étendent à partir de la face arrière du corps 121 perpendiculairement à celui-ci.

Les dents d'encliquetage 123 forment des saillies sur les faces extérieures 122A, tournées à l'opposé l'une de l'autre, des pattes 122. Elles comportent chacune une face d'accrochage 123A qui s'étend perpendiculairement à la patte 122 correspondante et qui est orientée vers la face arrière du corps 121. Cette face d'accrochage 123A est adaptée à s'engager sous la gorge longitudinale 8 correspondante du socle 1, et, ici, elle est adaptée à se bloquer contre la tranche libre du talon 6D de l'aile longitudinale 6 de la bande de clipsage correspondante du socle 1.

Le cache 110 se présente sous la forme d'une plaque 111 adaptée à recouvrir la face avant du corps 121 du support 120.

Selon une caractéristique remarquable de l'accessoire 100, au moins une patte 122 du support 120 est liée en permanence à la face arrière 111A du cache 110, tournée vers le support 120, par un bras de liaison 124 présentant au moins une zone flexible 124A.

Ainsi, le cache 110 est lié au support 120, qu'il soit monté ou non sur celui-ci, et il est donc imperdable.

Selon les modes de réalisation de l'accessoire représentés sur les différentes figures, chaque patte 122 du support 120 est liée par un bras de liaison 124 flexible à la face arrière 111A du cache. Toutefois, en variante, on peut prévoir qu'une seule patte 122 du support 120 ne soit liée au cache 110 par un bras de liaison 124. Dans ce dernier cas, l'autre patte d'encliquetage du support est liée uniquement au support par une liaison flexible formant une charnière de pivotement de ladite patte ou encore cette patte (non liée au cache) peut présenter une flexibilité propre qui lui permettrait de se déformer pour accrocher la dent d'encliquetage qu'elle porte à la bande de clipsage correspondante du socle de la goulotte.

Selon les modes de réalisation de l'accessoire 100 représentés sur les figures, le support 120, le cache 110 et les deux bras de liaison 124 forment une seule pièce monobloc issue de moulage.

Chaque bras de liaison 124 comporte un coude 124B ainsi qu'un amincissement d'épaisseur 124A à une extrémité liée à la patte 122 correspondante du support 120.

Le coude 124B confère une certaine flexibilité à chaque bras de liaison 124.

En outre, comme cela sera décrit plus en détail ultérieurement, l'amincissement d'épaisseur 124A forme une charnière de pivotement qui autorise le pivotement de la patte 122 pour l'accrochage et le décrochage de la dent d'encliquetage 123 sur le socle 1 (voir figure 8B).

Selon une caractéristique avantageuse de l'accessoire 100 représenté sur les figures 1 à 7, il comporte des moyens d'accrochage 127, distincts des dents d'encliquetage 123, conformés le long de deux côtés transversaux parallèles de l'accessoire et agencés pour coopérer avec les bandes de clipsage parallèles dudit socle 1 afin de stabiliser localement la largeur de ladite ouverture longitudinale 1A.

Ici, ces moyens d'accrochage 127 appartiennent au support 120.

Plus particulièrement, les moyens d'accrochage comprennent une nervure 127 placée sur chacun des côtés transversaux parallèles du corps 121 du support 120. Chaque nervure 127 est adaptée à s'engager derrière l'aile longitudinale 6 de la bande de clipsage correspondante du socle 1 dans la gorge longitudinale 8 formée à l'extrémité du retour 4 de l'aile latérale longitudinale 3 du socle 1 (voir figures 8A et 8B).

En outre, préférentiellement, le corps 121 du support 120 comporte sur lesdits deux côtés transversaux parallèles au moins un rebord 127C agencé pour prendre appui contre le bord libre avant de l'aile longitudinale 6 de la bande de clipsage correspondante du socle 1.

Chaque rebord 127C est ici formé par un décrochement de la face intérieure de chaque nervure 127. Ce décrochement est situé à proximité de l'extrémité libre de ladite nervure 127.

Une fois que le support 120 est encliqueté sur les bandes de clipsage du socle 1 au moyen de ses dents d'encliquetage 123, les rebords 127C, qui prennent appui sur le bord libre avant des ailes longitudinales 6 des bandes de clipsage du socle, évitent lors d'un choc que le support 120 s'enfonce dans le fond dudit socle. Ces rebords 127C forment alors des moyens anti-enfoncement du support 120.

Selon une autre caractéristique avantageuse de l'accessoire 100, le cache 110 comporte, en porte-à-faux, le long d'au moins un côté longitudinal, une avancée 112 destinée à recouvrir un bord transversal 9A d'une extrémité coupée d'un tronçon de couvercle 9 rapporté dans l'ouverture longitudinale 1A du socle 1 à côté de l'appareillage électrique 200 (voir figures 1, 4 et 16).

Comme le montrent les figures 1, 4 et 16, le support 120 comporte, en porte-à-faux, sur un côté longitudinal, en correspondance avec l'avancée 112 du cache 110, une plate-forme 128A adaptée à s'engager sous le bord transversal 9A de l'extrémité coupée dudit tronçon de couvercle 9 rapporté dans l'ouverture longitudinale du socle 1.

Ladite plate-forme 128A est ici formée par la face supérieure d'une poutre 128 qui s'étend perpendiculairement à l'axe longitudinal du support 120.

Ainsi, avantageusement, lorsque l'accessoire 100 est placé en position d'utilisation sur le socle 1, à côté de l'appareillage électrique 200, non seulement il stabilise localement la largeur de l'ouverture longitudinale 1A du socle 1, grâce à ses moyens d'accrochage 127, mais il réalise une jonction étanche entre lui et le bord transversal 9A de l'extrémité coupée du tronçon de couvercle 9 rapporté de manière adjacente dans l'ouverture longitudinale 1A du socle 1, en prenant ledit bord transversal 9A en sandwich entre l'avancée 112 du cache 110 et la plate-forme 128A du support 120 (voir figure 16).

La plate-forme 128A du support 120 forme avantageusement un appui pour l'extrémité coupée du tronçon de couvercle 9 de façon à éviter que, lors d'un choc ou d'une pression, celui-ci ne s'enfonce dans le socle 1.

En outre, la plate-forme 128A constitue un obstacle qui empêche un usager d'introduire à l'intérieur du socle de goulotte 1A un objet fin, comme un fil métallique ou la pointe d'un outil métallique, glissé à force entre le tronçon de couvercle 9 et l'avancée 112 du cache 110.

Avantageusement, on notera que la largeur de la plate-forme 128A du support 120 est telle qu'elle remplit correctement ses fonctions d'appui sous couvercle et d'obstacle à l'insertion de fils métalliques dans le socle de goulotte.

Par ailleurs, il est prévu des moyens de centrage et de verrouillage du cache 110 sur le support 120.

Selon l'exemple représenté sur les figures 1 à 7, lesdits moyens de centrage et de verrouillage comprennent, d'une part, sur le cache 110, au moins une patte d'encliquetage 125 qui porte au moins un cran 125A, et, d'autre part, sur le support 120, au moins un bord d'accrochage 121A dudit cran 125A porté par ladite patte d'encliquetage 125.

Plus précisément, la face arrière 111A du cache 110 porte, deux pattes d'encliquetage 125 parallèles aux bords transversaux du cache, portant chacune à leur extrémité libre un cran 125A destiné à s'accrocher sur un bord d'accrochage 121A du corps 121 du support 120. Ces pattes d'encliquetage 125 s'étendent perpendiculairement à la face arrière 111A du cache 110.

La face arrière 111A du cache 110 porte également deux couples de pattes de centrage 126 parallèles auxdites pattes d'encliquetage 125. Ces pattes de centrage 126 sont dépourvues de crans et sont destinées à s'engager dans des ouvertures 121B correspondantes du corps 121 du support 120 pour placer correctement le cache 110 sur ce dernier.

Les crans 125A sont placés à une hauteur telle sur les pattes d'encliquetage 125 que l'accrochage du cache 110 sur le corps 121 du support 120 provoque une déformation élastique des bras de liaison 124 qui poussent latéralement les pattes 122 du support 120 vers l'extérieur de l'accessoire 100 (voir figure 8B).

Selon une variante de réalisation de l'accessoire non représentée sur les figures, on peut prévoir que le cache porte des pattes d'encliquetage de longueurs différentes ou encore des pattes d'encliquetage comportant plusieurs crans d'accrochage à différentes hauteurs pour ajuster en hauteur le cache sur le support afin d'adapter leur écartement relatif à des épaisseurs différentes de couvercle de fermeture de goulotte.

Selon une autre caractéristique avantageuse de l'accessoire 100, le support 120 comporte le long du côté longitudinal opposé à celui le long duquel court l'avancée 112, une jupe 129 qui porte extérieurement au moins une nervure d'accrochage 129A longitudinale.

Ici, la jupe 129 du support 120 comporte le long dudit côté longitudinal deux nervures d'accrochage 129A longitudinales parallèles qui définissent entre elles une rainure longitudinale 129B.

Ces nervures d'accrochages 129A constituent des moyens d'appariement à un socle d'appareillage électrique dédié à clipsage direct sur le socle 1. En correspondance, le socle de l'appareillage électrique dédié comporte sur au moins une face une nervure destinée à être engagée à force dans la rainure longitudinale 129B du support 120 pour s'apparier à ce dernier.

Selon le mode de réalisation de l'accessoire 100 représenté sur la figure 2B, la rainure longitudinale 129B définie entre les deux nervures d'accrochage 129A, est interrompue en son milieu par une rainure transversale 129C de sorte qu'elle présente une forme en croix.

Un tel accessoire 100 est spécialement adapté à être apparié au socle 210 de la prise de courant 200 représentée sur les figures 11A et 11B.

Comme le montrent plus particulièrement les figures 11A, 11B, 14 et 17, le socle 210 de la prise de courant 200 comporte sur deux faces latérales 212 opposées, perpendiculaires aux faces latérales 211 portant les dents d'accrochage 215, une nervure 213 en forme de croix adaptée à s'engager à force dans la rainure 129B, 129C en forme de croix du support 120 de l'accessoire 100. Sur ces faces latérales 212, le socle 210 comporte également sous chaque nervure 213, deux rainures longitudinales 214 parallèles interrompues par la partie transversale de la nervure 213 en forme de croix.

Ainsi, comme le montrent les figures 12, 13 et 14, la prise de courant 200 peut être livrée avec deux accessoires 100 appariés à son socle 210.

Dans cette position de livraison, la nervure 213 en forme de croix prévue sur chacune des faces latérales 212 opposées du socle 210 est engagée à force dans la rainure 129B, 129C en forme de croix du support 120 de l'accessoire 100 correspondant.

La prise de courant 200 forme alors avec les deux accessoires un ensemble électrique autonome (voir figure 13).

Pour monter l'ensemble électrique dans l'ouverture longitudinale 1A du socle 1 d'une goulotte, l'installateur désengage la rainure 129B, 129C en forme de croix du support 120 de chaque accessoire 100 de chaque nervure 213 du socle 210 de la prise de courant 200. Il encliquette la prise de courant 200 sur les bandes de clipsage du socle 1. Puis, il encliquette chaque accessoire 100 sur les bandes de clipsage du socle 1, de part et d'autre de la prise de courant 200, de sorte que les deux nervures d'accrochage 129A du support 120 de chaque accessoire 100 s'engagent sous chaque nervure 213 du socle 210 de la prise de courant 200 dans lesdites rainures longitudinales 214 de ce socle 210 (voir figures 16 et 17). Chaque accessoire 100 est ainsi apparié par frottement au socle 210 de la prise de courant 200, le cache 110, accroché au support 120, étant positionné bord à bord avec l'enjoliveur 220 de la prise de courant 200, sensiblement dans le même plan que ce dernier (voir les figures 15 et 16).

Avantageusement, les nervures d'accrochage 129A longitudinales du support 120 de l'accessoire 100 peuvent servir au montage de l'appareillage électrique 200 dans le socle 1 lorsque celui-ci est placé verticalement sur une paroi. En effet, dans le cas d'un montage vertical du socle 1, ses bandes de clipsage sont inopérantes pour le montage des appareillages électriques à clipsage direct puisqu'elles s'étendent verticalement. Ainsi, l'installateur encliquette deux accessoires 100 en vis-à-vis sur le socle 1 pour que leurs nervures d'accrochage 129A horizontales par rapport au socle 1 servent de bandes de clipsage sur lesquelles vont s'accrocher les dents d'accrochage 215 et les languettes 216 du socle 210 de l'appareillage électrique 200.

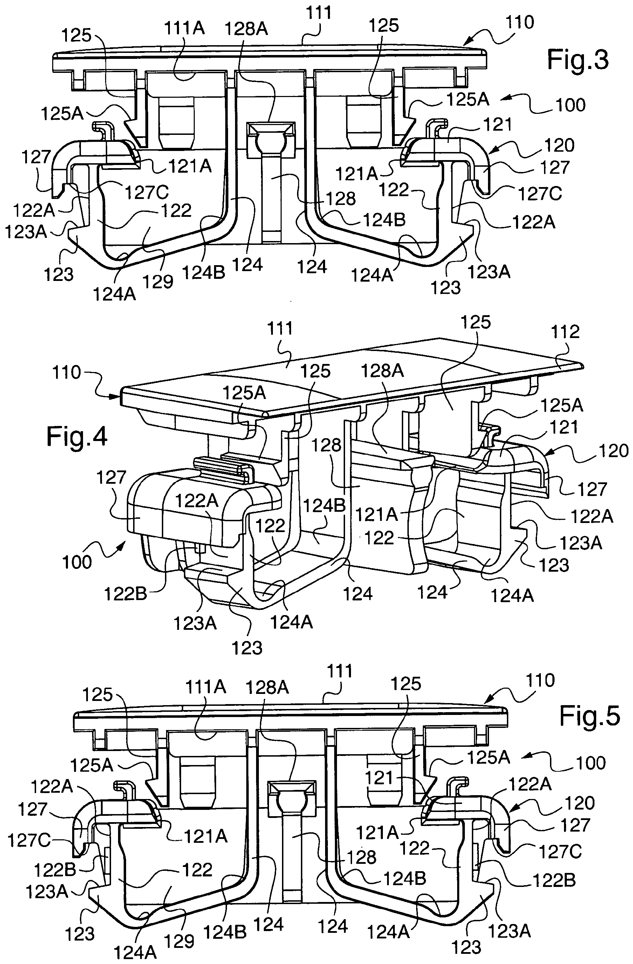

Selon une caractéristique particulièrement avantageuse de l'accessoire 100 représenté sur les figures 4 à 7 et 9A à 10B, il comporte des moyens d'immobilisation 122B, 123B, 127B conformés en saillie ou en creux le long d'au moins un des deux côtés transversaux parallèles de l'accessoire et agencés pour coopérer avec des moyens complémentaires 10, 6F prévus sur le socle 1 afin d'immobiliser ledit accessoire 100 selon la direction longitudinale dudit socle 1.

Ici, les moyens d'immobilisation appartiennent au support 120 de l'accessoire 100.

Selon les modes de réalisation représentés sur les différentes figures, lesdits moyens d'immobilisation sont portés par une face externe de chaque patte du support ou ils appartiennent aux dents d'encliquetage du support ou encore ils appartiennent auxdits moyens d'accrochage.

Selon le mode de réalisation de l'accessoire 100 représenté sur les figures 4, 5, 9A et 9B, lesdits moyens d'immobilisation comprennent au moins un élément rigide 122B adapté à s'enfoncer dans un tampon 10 en matière élastique à fort coefficient de frottement prévu sur le socle 1.

Chaque tampon 10 en matière élastique à fort coefficient forme un moyen de freinage de l'accessoire 100 sur le socle 1.

Plus précisément, selon ce mode de réalisation, chaque patte 122 du support 120 de l'accessoire 100 porte en saillie sur sa face extérieure 122A un plot rigide 122B adapté à s'enfoncer dans le tampon 10 correspondant prévu sur le socle 1.

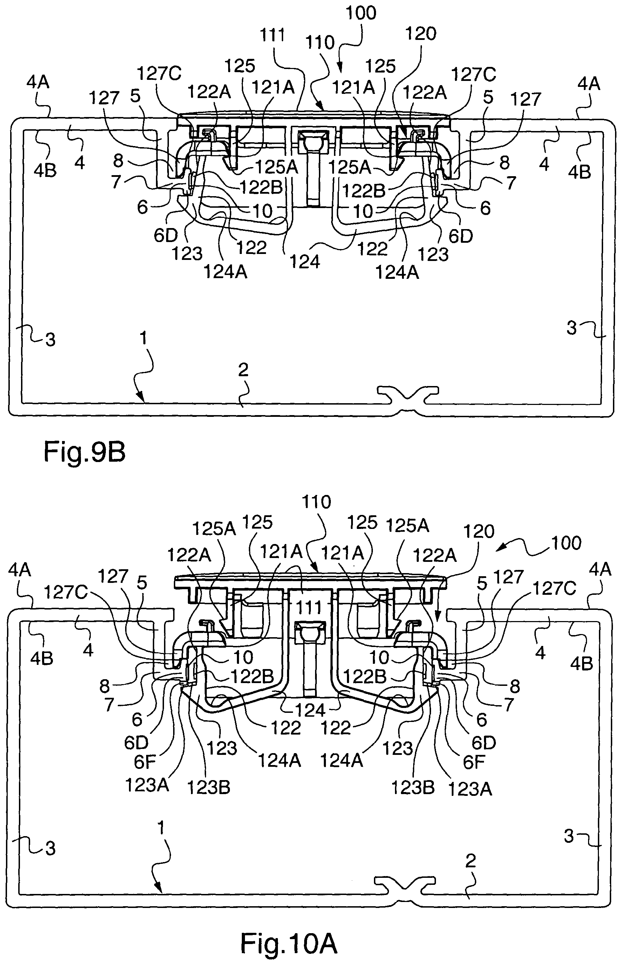

Selon cet exemple, chaque tampon 10 en matière élastique est placé sur la face externe 6A de chaque aile longitudinale 6 de ladite bande de clipsage du socle 1 (voir figures 9A et 9B).

Chaque tampon 10 se présente sous la forme d'une bande prévue sur la longueur de la bande de clipsage correspondante du socle 1. Ici, chaque bande est continue sur la longueur de la bande de clipsage. Préférentiellement, la hauteur de la bande est inférieure à environ 4,5 mm ce qui correspond à la hauteur préférentielle de l'aile longitudinale 6 de chaque bande de clipsage.

Toutefois, selon une variante non représentée, on pourra prévoir que chaque bande en matière élastique à fort coefficient de frottement est discontinue sur la longueur de la bande de clipsage.

La matière élastique de chaque tampon 10 est par exemple un élastomère tel qu'un polyuréthane ou un caoutchouc mousse, ou encore une résine plastique telle qu'une résine de chlorure de polyvinyle dont la dureté est comprise entre 30 shore A et 100 shore A, préférentiellement égale à 65 shore A.

Chaque tampon 10 est avantageusement co-extrudé avec le socle 1 mais il peut être également rapporté par collage ou par soudage sur celui-ci ou encore il peut être lié par une liaison mécanique au socle telle que par exemple par une liaison à emboîtement ou par encliquetage.

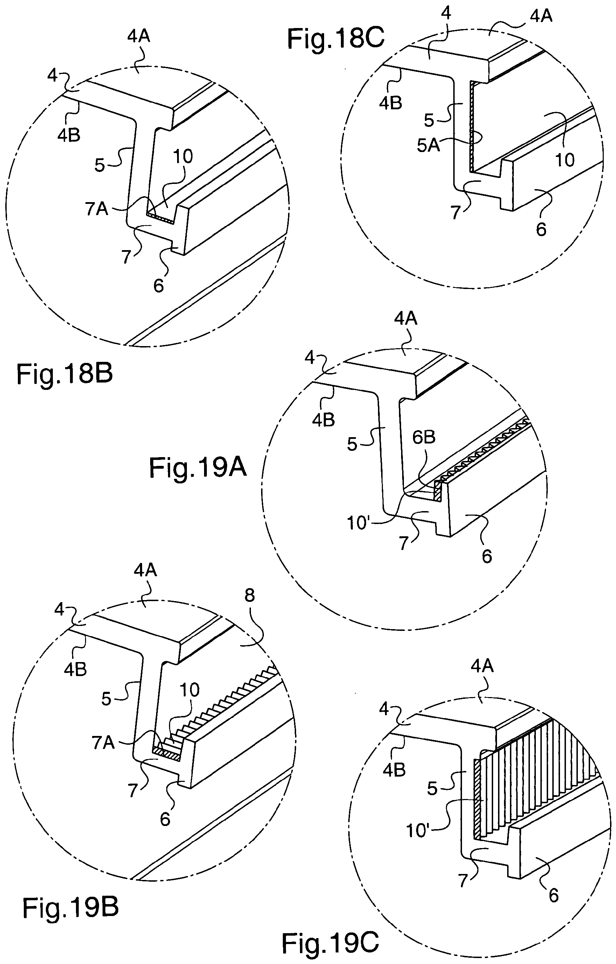

Selon d'autres modes de réalisation du socle 1 de la goulotte représentés plus particulièrement sur les figures 18A à 18C et 19A à 19C, chaque tampon 10 ;10' en matière élastique à fort coefficient de frottement peut être placé à d'autres endroits du socle 1, comme, par exemple, sur la face interne 6B de l'aile longitudinale 6 de ladite bande de clipsage (voir figures 18A et 19A) ou sur une face de l'entretoise 7 de ladite bande de clipsage, au fond 7A de la gorge longitudinale 8 (voir figures 18B, 19B) ou encore sur la face interne 5A de la paroi longitudinale rentrante 5 du socle 1 (voir figures 18C et 19C).

Selon d'autres variantes non représentées du socle de la goulotte, chaque tampon en matière élastique à fort coefficient de frottement peut être placé sur la tranche supérieure 6C ou la tranche inférieure 6E de l'aile longitudinale 6 de la bande de clipsage correspondante du socle.

Pour chacun des modes de réalisation du socle 1 de la goulotte, il est prévu une variante correspondante de l'accessoire 100 qui comporte un élément rigide placé de manière adaptée sur son support 120 de manière à s'enfoncer dans le tampon prévu sur le socle lorsque l'accessoire est monté sur ce dernier.

En particulier, lorsque chaque tampon 10 est prévu en bande sur la face interne 5A de chaque paroi longitudinale rentrante 5 du socle 1 (voir figures 18C et 19C), la face externe 127A de chaque nervure 127 d'accrochage du support 120 de l'accessoire 100 porte en saillie un élément rigide 127B (voir figure 7). Ainsi, lorsque chaque nervure 127 de l'accessoire 100 est accrochée au socle 1, derrière l'aile longitudinale 6 de la bande de clipsage, dans la gorge longitudinale 8 correspondante, l'élément rigide 127B qu'elle porte s'enfonce dans le tampon 10 correspondant.

Lorsque le tampon 10 est prévu sur la tranche inférieure 6E de l'aile longitudinale 6 ou sur la face inférieure de l'entretoise 7 (sous la gorge longitudinale 8) de chaque bande de clipsage du socle 1, l'élément rigide est placé sur la face d'accrochage 123A de la dent d'encliquetage 123 portée par chaque patte 122 du support 120 de l'accessoire 100. Ainsi, lorsque les dents d'encliquetage 123 de l'accessoire 100 s'accrochent sur le socle 1, les éléments rigides qu'elles portent s'enfoncent dans les tampons correspondants.

Comme le montrent plus particulièrement les figures 19A à 19C, on peut prévoir que chaque tampon 10' comporte une surface d'accroche avec des reliefs comme une surface striée, grainée, moletée, crantée ou autre de façon à augmenter le pouvoir de freinage du tampon.

Selon une autre variante de l'accessoire 100, ses moyens d'immobilisation comprennent au moins un tampon en matière élastique à fort coefficient de frottement adapté à prendre appui contre le tampon en matière élastique à fort coefficient de frottement prévu sur le socle 1.

L'appui de deux tampons en matière élastique à fort coefficient de frottement l'un contre l'autre permet d'obtenir également un freinage ou une immobilisation efficace de l'accessoire sur le socle.

Le tampon en matière élastique peut être prévu sur le support 120 de l'accessoire 100 à la place de chaque élément rigide adapté à s'enfoncer dans chaque tampon du socle.

La matière élastique de chaque tampon de l'accessoire 100 peut également être un élastomère tel qu'un polyuréthane ou un caoutchouc mousse ou encore une résine plastique telle qu'une résine de chlorure de polyvinyle dont la dureté est comprise entre 30 shore A et 100 shore A, préférentiellement égale à 65 shore A.

Selon le mode de réalisation de l'accessoire 100 représenté sur les figures 6, 10A et 10B, lesdits moyens d'immobilisation comprennent, outre l'élément rigide 122B adapté à s'enfoncer dans un tampon en matière élastique du socle 1, au moins un plot 123B adapté à s'engager dans un cran 6F prévu sur ledit socle 1.

Ici, il est prévu un plot 123B en saillie sur chaque face d'accrochage 123A de chaque dent d'encliquetage 123 portée par chaque patte 122 du support 120 de l'accessoire 100.

En correspondance, il est prévu des crans 6F régulièrement répartis tout le long de chaque bande de clipsage dans le talon 6D de chaque aile longitudinale 6 de chaque bande de clipsage du socle 1. Chaque cran 6F présente une largeur qui correspond à celle de chaque plot 123B prévu sur l'accessoire 100. Ainsi, lorsque chaque plot 123B de l'accessoire 100 est engagé dans un cran 6F, il est bloqué dans celui-ci suivant l'axe longitudinal du socle 1 et il immobilise ainsi l'accessoire 100 sur le socle 1.

Enfin selon d'autres variantes de l'accessoire non représentées on peut prévoir que lesdits moyens d'immobilisation comprennent au moins une série de stries ou des ondulations adaptées à coopérer avec des stries ou des ondulations complémentaires prévues sur le socle ou encore à s'enfoncer dans un tampon 10 en matière élastique à fort coefficient de frottement prévu sur la bande de clipsage correspondante du socle.

En référence aux figures 8A à 10B et 16, nous allons décrire la mise en place de l'accessoire 100 selon l'invention dans l'ouverture longitudinale 1A du socle 1 d'une goulotte.

Le support 120 de l'accessoire est accroché aux bandes de clipsage du socle 1 sans que le cache 110 ne soit encliqueté sur le support (voir figures 8A, 9A, 10A).

Dans cette position, les nervures 127 du support 120 sont engagées dans les deux gorges longitudinales 8 du socle 1 derrière les ailes longitudinales 6 des bandes de clipsage. L'accrochage des nervures 127 derrière les ailes longitudinales 6 des bandes de clipsage du socle 1 permet à l'accessoire 100 de stabiliser localement la largeur de l'ouverture longitudinale 1A du socle 1. Les rebords 127C prévus sur les faces intérieures des nervures 127 sont en appui contre les bords libres avant des ailes longitudinales 6 du socle 1. Ces rebords 127C forment des moyens anti-enfoncement du support 120 à l'intérieur du socle 1. Les dents d'encliquetage 123 portées par les pattes 122 du support 120 sont placées sous les talons 6D des ailes longitudinales 6 des bandes de clipsage du socle 1 sans être bloquées contre ceux-ci si bien que le support 120, tout en étant accroché ou encliqueté sur le socle 1, peut être coulissé sur les bandes de clipsage pour ajuster la position définitive de l'accessoire 100 sur le socle 1.

Le cache 110 est alors encliqueté sur le support 120 de l'accessoire 100 de façon à recouvrir la face avant de son corps 121.

Pour cela, les crans 125A des pattes d'encliquetage 125 du cache 110 sont accrochés aux bords d'accrochage 121A du support 120. Lors de cet accrochage, le cache 110 est guidé sur le support 120 au moyen des pattes 126 de guidage et de centrage qui s'engagent dans les ouvertures 121B correspondantes du support 120.

L'accrochage du cache 110 sur le support 120 provoque la déformation élastique des bras de liaison 124 qui poussent vers l'extérieur de l'accessoire 100, en direction des bandes de clipsage du socle 1, les pattes 122 en les faisant pivoter grâce à la liaison flexible 124A formant une charnière de pivotement de sorte que les faces d'accrochage 123A des dents d'encliquetage 123 qu'elles portent, viennent se plaquer contre le talon 6D des ailes longitudinales 6 des bandes de clipsage du socle 1.

De cette manière, les dents d'encliquetage 123 sont verrouillées sur les bandes de clipsage du socle 1 (voir figure 8A).

L'élément rigide 122B que portent éventuellement les pattes 122 du support 120 s'enfonce dans le tampon 10 en matière élastique à fort coefficient du socle 1 pour immobiliser l'accessoire 100 suivant la direction longitudinale du socle 1 (voir figures 9B et 10B).

Le plot 123B que portent éventuellement les dents d'encliquetage 123 du support 120 s'engage dans le cran 6F du socle 1 pour également immobiliser l'accessoire 100 suivant la direction longitudinale du socle 1 (voir figure 10B).

Comme le montre plus particulièrement la figure 16, dans cette position encliquetée sur le socle 1 à côté d'un appareillage électrique 200, les deux nervures d'accrochage 129A du support 120 de l'accessoire 100 s'engagent sous chaque nervure 213 du socle 210 de l'appareillage électrique 200 dans lesdites rainures longitudinales 214 de ce socle 210 et la rainure transversale 129C du support 120 de l'accessoire 100 s'engage sur la partie transversale de la nervure 213 en croix du socle 210 de l'appareillage électrique 200. L'accessoire 100 est ainsi apparié par frottement au socle 210 de l'appareillage électrique 200, le cache 110, accroché au support 120, étant positionné bord à bord avec l'enjoliveur 220 de l'appareillage électrique 200, sensiblement dans le même plan que ce dernier. En outre, l'accessoire 100 réalise une jonction étanche entre lui et le bord transversal 9A de l'extrémité coupée du tronçon de couvercle 9 rapporté de manière adjacente dans l'ouverture longitudinale 1A du socle 1, en prenant ledit bord transversal 9A en sandwich entre l'avancée 112 du cache 110 et la plate-forme 128A du support 120.

Pour démonter l'accessoire 100 du socle 1, il suffit de décrocher le cache 110 du support 120. Ce décrochage provoque le retour élastique en position initiale des bras de liaison 124 qui entraînent le pivotement des pattes 122 du support 120 vers l'intérieur de l'accessoire 100, en éloignement du socle, afin de les déverrouiller des bandes de clipsage du socle 1. Puis, il suffit de décrocher les nervures 127 du support 120 des ailes longitudinales 6 des bandes de clipsage du socle 1.

## Revendications

1. Accessoire (100) à rapporter en travers d'une ouverture longitudinale d'un socle (1) d'une goulotte électrique, qui comprend deux parties, à savoir un support (120) et un cache (110) à monter sur le support, ledit support (120) comportant, sur chacun de ses deux côtés transversaux parallèles, une patte (122) portant extérieurement au moins une dent d'encliquetage (123) adaptée à s'encliqueter sur le socle, et le support (120) étant lié à la face arrière du cache (110), tournée vers le support, par un bras de liaison (124) présentant au moins une zone flexible (124A), **caractérisé en ce que** le bras de liaison (124) établit une liaison flexible permanente entre le cache (110) et au moins une patte (122) dudit support (120) de sorte que le montage du cache (110) sur le support (120) provoque une déformation élastique du bras de liaison (124) qui pousse latéralement ladite patte (122) vers l'extérieur de l'accessoire (100).

2. Accessoire selon la revendication 1, dans lequel le support (120), le cache (110) et chaque bras de liaison (124) forment une seule pièce monobloc issue de moulage.

3. Accessoire selon l'une des revendications précédentes, dans lequel chaque bras de liaison (124) est coudé.

4. Accessoire selon l'une des revendications précédentes, dans lequel chaque bras de liaison (124) présente un amincissement d'épaisseur (124A) à une extrémité liée à ladite patte (122) correspondante du support (120).

5. Accessoire selon l'une des revendications précédentes, dans lequel chaque patte (122) du support (120) est liée en permanence à la face arrière du cache (110), tournée vers le support, par un bras de liaison (124) présentant au moins une zone flexible (124A).

6. Accessoire selon l'une des revendications précédentes, dans lequel il est prévu des moyens d'accrochage (127), distincts des dents d'encliquetage (123), conformés le long de deux côtés transversaux parallèles de l'accessoire et agencés pour coopérer avec des bandes de clipsage parallèles dudit socle (1) afin de stabiliser localement la largeur de ladite ouverture longitudinale.

7. Accessoire selon la revendication précédente, dans lequel lesdits moyens d'accrochage (127) appartiennent au support (120).

8. Accessoire selon l'une des deux revendications précédentes, dans lequel lesdits moyens d'accrochage comprennent sur chacun desdits côtés transversaux parallèles, une nervure (127) adaptée à s'engager derrière une aile longitudinale (6) de la bande de clipsage correspondante du socle (1) dans une gorge longitudinale (8) formée à l'extrémité d'un retour (4) d'une aile latérale longitudinale du socle (1).

9. Accessoire selon l'une des revendications précédentes, qui comporte des moyens d'immobilisation (122B, 123B) conformés en saillie ou en creux le long d'au moins un des deux côtés transversaux parallèles de l'accessoire et agencés pour coopérer avec des moyens complémentaires (10, 10', 6F) prévus sur le socle (1) afin d'immobiliser ledit accessoire selon la direction longitudinale dudit socle.

10. Accessoire selon la revendication précédente, dans lequel les moyens d'immobilisation (122B,123B) appartiennent au support (120).

11. Accessoire selon l'une des deux revendications précédentes, dans lequel lesdits moyens d'immobilisation comprennent au moins un plot (123B) adapté à s'engager dans un cran (6F) prévu sur ledit socle (1).

12. Accessoire selon l'une des trois revendications précédentes, dans lequel lesdits moyens d'immobilisation comprennent au moins un élément rigide (122B) adapté à s'enfoncer dans un tampon (10) en matière élastique à fort coefficient de frottement prévu sur le socle (1).

13. Accessoire selon l'une des revendications 9 à 11, dans lequel lesdits moyens d'immobilisation comprennent au moins un tampon en matière élastique à fort coefficient de frottement.

14. Accessoire selon la revendication précédente, dans lequel la matière élastique de chaque tampon est un élastomère tel qu'un polyuréthane ou un caoutchouc mousse.

15. Accessoire selon la revendication 13, dans lequel la matière élastique de chaque tampon est une résine plastique telle qu'une résine de chlorure de polyvinyle dont la dureté est comprise entre 30 shore A et 100 shore A, préférentiellement égale à 65 shore A.

16. Accessoire selon l'une des revendications 9 à 15, dans lequel lesdits moyens d'immobilisation comprennent au moins une série de stries.

17. Accessoire selon l'une des revendications 9 à 15, dans lequel lesdits moyens d'immobilisation comprennent des ondulations.

18. Accessoire selon l'une des revendications 9 à 17, dans lequel lesdits moyens d'immobilisation (123B) appartiennent aux dents d'encliquetage (123) du support (120).

19. Accessoire selon l'une des revendications 9 à 18, dans lequel lesdits moyens d'immobilisation (122B) sont portés par une face externe de chaque patte (122) du support (120).

20. Accessoire selon l'une des revendications 9 à 17 dans sa dépendance à l'une des revendications 6 à 8, dans lequel lesdits moyens d'immobilisation (127B) appartiennent auxdits moyens d'accrochage (127).

21. Accessoire selon l'une des revendications précédentes, dans lequel il est prévu des moyens de centrage et de verrouillage du cache sur le support.

22. Accessoire selon la revendication précédente, dans lequel lesdits moyens de centrage et de verrouillage comprennent, d'une part, sur l'une des parties de l'accessoire, au moins une patte d'encliquetage (125) qui porte au moins un cran (125A), et, d'autre part, sur l'autre des parties de l'accessoire, au moins un bord d'accrochage (121A) dudit cran porté par ladite patte d'encliquetage.

23. Accessoire selon la revendication précédente, dans lequel chaque patte d'encliquetage (125) crantée est portée par la face arrière du cache (110) et s'étend perpendiculairement à celle-ci et chaque bord d'accrochage (121A) est prévu dans ledit support (120).

24. Accessoire selon l'une des trois revendications précédentes, dans lequel lesdits moyens de centrage et de verrouillage comprennent, sur l'une des deux parties, au moins une patte (126) et, sur l'autre des parties de l'accessoire, une ouverture (121B) accueillant ladite patte.

25. Accessoire selon la revendication précédente, dans lequel chaque patte (126) est portée par la face arrière du cache (110) et s'étend perpendiculairement à celle-ci et chaque ouverture (121B) est prévue dans le support (120).

26. Accessoire selon l'une des revendications précédentes, dans lequel le support comporte sur lesdits deux côtés transversaux parallèles au moins un rebord (127C) agencé pour prendre appui contre le bord d'extrémité libre d'une aile longitudinale (6) de la bande de clipsage correspondante du socle.

27. Accessoire selon les revendications 8 et 26, dans lequel chaque rebord (127C) est formé par un décrochement de la face intérieure de chaque nervure (127).

28. Accessoire selon l'une des revendications précédentes, dans lequel le cache (110) comporte, en porte-à-faux, le long d'au moins un côté longitudinal, une avancée (112) destinée à recouvrir un bord transversal d'une extrémité coupée d'un tronçon de couvercle rapporté dans l'ouverture longitudinale du socle.

29. Accessoire selon la revendication précédente, dans lequel le support (120) comporte, en porte-à-faux, sur un côté longitudinal, en correspondance avec l'avancée (112) du cache (110), une plate-forme (128A) adaptée à s'engager sous le bord transversal de l'extrémité coupée dudit tronçon de couvercle rapporté dans l'ouverture longitudinale du socle.

30. Accessoire selon la revendication précédente, dans lequel ladite plate-forme (128A) est formée par la face supérieure d'une poutre (128) qui s'étend perpendiculairement à l'axe longitudinal du support (120).

31. Accessoire selon l'une des revendications précédentes, dans lequel le support (120) comporte le long d'un côté longitudinal au moins une nervure d'accrochage (129A).

32. Accessoire selon la revendication précédente, dans lequel ledit support comporte le long dudit côté longitudinal deux nervures d'accrochage (129A) parallèles qui définissent entre elles une rainure longitudinale (129B).

33. Accessoire selon l'une des revendications précédentes, dans lequel le support (120) comporte des moyens d'appariement à un socle d'appareillage électrique (200) à clipsage direct sur le socle.

34. Accessoire selon la revendication précédente, dans lequel les moyens d'appariement comprennent au moins une rainure (129B).

35. Accessoire selon la revendication précédente, dans lequel chaque rainure (129B) court le long d'un côté longitudinal du support.

36. Accessoire selon la revendication précédente, dans lequel ladite rainure longitudinale (129B) est interrompue en son milieu par une autre rainure transversale (129C).

37. Ensemble électrique qui comprend, d'une part, un appareillage électrique (200) comportant un socle (210) présentant deux faces latérales (212) opposées pourvues de moyens d'appariement (213, 214), et, d'autre part, un accessoire (100) selon l'une des revendications 31 à 36 dont les moyens d'appariement (129A, 129B, 129C) sont adaptés à coopérer avec lesdits moyens d'appariement (213, 214) du socle (210) de l'appareillage électrique (200).

38. Ensemble électrique selon la revendication précédente, dans lequel lesdits moyens d'appariement du socle de l'appareillage électrique comprennent une nervure (213) prévue sur chaque face latérale (212) du socle (210).

39. Ensemble électrique selon la revendication précédente, dans lequel ladite nervure (213) présente une forme en croix.

40. Ensemble électrique comprenant, d'une part, une goulotte avec un socle (1) présentant une ouverture longitudinale (1A) munie de deux bandes de clipsage aptes à permettre le montage direct d'accessoires et d'appareillages électriques, ainsi que des moyens d'immobilisation (10, 6F) prévus sur une partie intérieure du socle (1), et, d'autre part, un accessoire (100) selon la revendication 9 à monter dans ladite ouverture longitudinale (1A) sur les bandes de clipsage du socle (1), dont les moyens d'immobilisation (122B, 123B) sont adaptés à coopérer avec lesdits moyens d'immobilisation (10, 6F) du socle (1) de la goulotte.

41. Ensemble électrique selon la revendication précédente, dans lequel lesdits moyens d'immobilisation du socle (1) comprennent des moyens de freinage qui comportent un tampon (10) d'une matière élastique à fort coefficient de frottement.

42. Ensemble électrique selon la revendication précédente, dans lequel chaque tampon (10) se présente sous la forme d'une bande prévue sur la longueur de ladite bande de clipsage.

43. Ensemble électrique selon la revendication précédente, dans lequel chaque bande d'une matière élastique est continue sur la longueur de la bande de clipsage.

44. Ensemble électrique selon la revendication 42, dans lequel chaque bande d'une matière élastique est discontinue sur la longueur de la bande de clipsage.

45. Ensemble électrique selon l'une des revendications 41 à 44, dans lequel la matière élastique de chaque tampon (10) est un élastomère tel qu'un polyuréthane ou un caoutchouc mousse.

46. Ensemble électrique selon l'une des revendications 41 à 44, dans lequel la matière élastique de chaque tampon (10) est une résine plastique telle qu'une résine de chlorure de polyvinyle dont la dureté est comprise entre 30 shore A et 100 shore A, préférentiellement égale à 65 shore A.

47. Ensemble électrique selon l'une des revendications 41 à 46, dans lequel chaque tampon (10') comporte une surface avec des reliefs.

48. Ensemble électrique selon l'une des revendications 41 à 47, dans lequel chaque bande de clipsage comprend une aile longitudinale (6), située en dessous du plan de ladite ouverture longitudinale, rattachée par une entretoise (7) à une paroi longitudinale rentrante (5) rattachée à une face arrière d'un des retours (4) et s'étendant à l'intérieur du socle (1) parallèlement à une aile latérale longitudinale (3) du socle.

49. Ensemble électrique selon la revendication précédente, dans lequel le tampon (10) en matière élastique est placé sur une face externe (6A) de l'aile longitudinale (6) de ladite bande de clipsage.

50. Ensemble électrique selon la revendication 48, dans lequel le tampon (10) en matière élastique est placé sur une face interne (6B) de l'aile longitudinale (6) de ladite bande de clipsage.

51. Ensemble électrique selon la revendication 48, dans lequel le tampon en matière élastique est placé sur la tranche supérieure (6C) de l'aile longitudinale (6) de ladite bande de clipsage.

52. Ensemble électrique selon la revendication 48, dans lequel le tampon (10) en matière élastique est placé sur la tranche inférieure (6E) de l'aile longitudinale (6) de ladite bande de clipsage.

53. Ensemble électrique selon la revendication 48, dans lequel le tampon (10) en matière élastique est placé sur une face (7A) de l'entretoise (7) de ladite bande de clipsage.

54. Ensemble électrique selon la revendication 48, dans lequel le tampon (10) en matière élastique est placé sur une face interne (5A) de la paroi longitudinale rentrante (5) du socle (1).

55. Ensemble électrique selon l'une des revendications 48 à 54, dans lequel l'aile longitudinale (6) d'au moins une bande de clipsage du socle (1) comprend au moins un cran (6F) adapté à recevoir un plot dudit accessoire (100).

56. Ensemble électrique selon l'une des revendications 48 à 54, dans lequel l'aile longitudinale d'au moins une bande de clipsage du socle comprend au moins une série de stries adaptées à coopérer avec une série de stries complémentaires prévues sur l'accessoire.

57. Ensemble électrique selon l'une des revendications 48 à 54, dans lequel l'aile longitudinale d'au moins une bande de clipsage du socle comprend des ondulations adaptées à coopérer avec des ondulations complémentaires prévues sur l'accessoire.

## Patentansprüche

1. Zubehörteil (100), das quer über eine längs gerichtete Öffnung eines Sockels (1) eines elektrischen Kabelkanals, der zwei Teile aufweist, und zwar einen Trägerteil (120) und einen auf dem Trägerteil zu befestigenden Deckel (110), anzubringen ist, wobei der Trägerteil (120) auf jeder seiner beiden transversalen parallelen Seiten eine Halterung (122) aufweist, die außen wenigstens einen Zahn zum Einrasten (123) trägt, der dazu ausgelegt ist, am Sockel einzurasten, und wobei der Trägerteil (120) mit der dem Trägerteil zugewandten Rückseite des Deckels (110) durch einen Verbindungsarm (124) verbunden ist, der wenigstens einen flexiblen Bereich (124A) aufweist, **dadurch gekennzeichnet, daß** der Verbindungsarm (124) eine dauerhafte flexible Verbindung zwischen dem Deckel (110) und wenigstens einer Halterung (122) des Trägerteils (120) herstellt, so daß das Befestigen des Deckels (110) auf dem Trägerteil (120) eine elastische Verformung des Verbindungsarms (124) bewirkt, die die Halterung (122) seitlich nach außerhalb des Zubehörteils (100) drückt.

2. Zubehörteil gemäß Anspruch 1, bei dem das Trägerteil (120), der Deckel (110) und jeder Verbindungsarm (124) ein durch Formen erhaltenes einstückiges Teil bilden.

3. Zubehörteil gemäß einem der vorangehenden Ansprüche, bei dem jeder Verbindungsarm (124) abgewinkelt ist.

4. Zubehörteil gemäß einem der vorangehenden Ansprüche, bei dem jeder Verbindungsarm (124) an einem mit der entsprechenden Halterung (122) des Trägerteils (120) verbundenen Ende eine Verringerung der Dicke (124A) aufweist.

5. Zubehörteil gemäß einem der vorangehenden Ansprüche, bei dem jede Halterung (122) des Trägerteils (120) ständig mit der dem Trägerteil zugewandten Rückseite des Deckels (110) durch einen Verbindungsarm (124) verbunden ist, der wenigstens einen flexiblen Bereich (124A) aufweist.

6. Zubehörteil gemäß einem der vorangehenden Ansprüche, bei dem von den Zähnen zum Einrasten (123) verschiedene Einhakmittel (127) vorgesehen sind, die entlang der beiden transversalen parallelen Seiten des Zubehörteils ausgebildet sind und dazu angeordnet sind, mit parallelen Einrastleisten des Sockels (1) zusammenzuwirken, um die Breite der längs gerichteten Öffnung lokal zu stabilisieren.

7. Zubehörteil gemäß dem vorangehenden Anspruch, bei dem die Einhakmittel (127) zum Trägerteil (120) gehören.

8. Zubehörteil gemäß einem der beiden vorangehenden Ansprüche, bei dem die Einhakmittel auf jeder der beiden transversalen parallelen Seiten eine Rippe (127) aufweisen, die dazu ausgelegt ist, hinter einem Längsflügel (6) der entsprechenden Einrastleiste des Sockels (1) in eine am Ende einer Rückführung (4) eines seitlichen längs gerichteten Flügels des Sockels (1) gebildete längs gerichtete Rille (8) einzugreifen.

9. Zubehörteil gemäß einem der vorangehenden Ansprüche, das Festlegungsmittel (122B, 123B) aufweist, die entlang wenigstens einer der beiden transversalen parallelen Seiten des Zubehörteils hervorstehend oder hohl ausgebildet sind und die so angeordnet sind, daß sie mit auf dem Sockel (1) vorgesehenen komplementären Mitteln (10, 10', 6F) zusammenwirken, um das Zubehörteil in der Längsrichtung des Sockels festzulegen.

10. Zubehörteil gemäß dem vorangehenden Anspruch, bei dem die Festlegungsmittel (122B, 123B) zum Trägerteil (120) gehören.

11. Zubehörteil gemäß einem der beiden vorangehenden Ansprüche, bei dem die Festlegungsmittel wenigstens einen Zapfen (123B) aufweisen, der dazu ausgelegt ist, in eine auf dem Sockel (1) vorgesehene Raste (6F) einzugreifen.

12. Zubehörteil gemäß einem der drei vorangehenden Ansprüche, bei dem die Festlegungsmittel wenigstens ein steifes Element (122B) aufweisen, das dazu ausgelegt ist, in einen auf dem Sockel (1) vorgesehenen Puffer (10) aus elastischem Material mit hohem Reibungskoeffizienten einzudringen.

13. Zubehörteil gemäß einem der Ansprüche 9 bis 11, bei dem die Festlegungsmittel wenigstens einen Puffer aus elastischem Material mit hohem Reibungskoeffizienten aufweisen.

14. Zubehörteil gemäß dem vorangehenden Anspruch, bei dem das elastische Material jedes Puffers ein Elastomer wie zum Beispiel ein Polyurethan oder ein Schaumgummi ist.

15. Zubehörteil gemäß Anspruch 13, bei dem das elastische Material jedes Puffers ein plastisches Harz wie zum Beispiel ein Polyvinylchloridharz ist, dessen Härte zwischen 30 Shore A und 100 Shore A beträgt und vorzugsweise gleich 65 Shore A ist.

16. Zubehörteil gemäß einem der Ansprüche 9 bis 15, bei dem die Festlegungsmittel wenigstens eine Reihe Riefen aufweisen.

17. Zubehörteil gemäß einem der Ansprüche 9 bis 15, bei dem die Festlegungsmittel wellig sind.

18. Zubehörteil gemäß einem der Ansprüche 9 bis 17, bei dem die Festlegungsmittel (123B) zu den Zähnen zum Einrasten (123) des Trägerteils (120) gehören.

19. Zubehörteil gemäß einem der Ansprüche 9 bis 18, bei dem die Festlegungsmittel (122B) von einer Außenseite jeder Halterung (122) des Trägerteils (120) getragen werden.

20. Zubehörteil gemäß einem der Ansprüche 9 bis 17 in Abhängigkeit von einem der Ansprüche 6 bis 8, bei dem die Festlegungsmittel (127B) zu den Einhakmitteln (127) gehören.

21. Zubehörteil gemäß einem der vorangehenden Ansprüche, bei dem Mittel zum Zentrieren und Verriegeln des Deckels auf dem Trägerteil vorgesehen sind.

22. Zubehörteil gemäß dem vorangehenden Anspruch, bei dem die Mittel zum Zentrieren und Verriegeln einerseits auf einem der Teile des Zubehörteils wenigstens eine Einrasthalterung (125), die wenigstens eine Raste (125A) aufweist, und andererseits auf dem anderen der Teile des Zubehörteils wenigstens einen Rand (121A) zum Einrasten in der von der Einrasthalterung getragenen Raste aufweist.

23. Zubehörteil gemäß dem vorangehenden Anspruch, bei dem jede geriffelte Einrasthalterung (125) von der Rückseite des Deckels (110) getragen wird und sich senkrecht zu dieser erstreckt und jeder Rand (121A) zum Einrasten im Trägerteil (120) vorgesehen ist.

24. Zubehörteil gemäß einem der drei vorangehenden Ansprüche, bei dem die Mittel zum Zentrieren und Verriegeln auf einem der beiden Teile wenigstens eine Halterung (126) und auf dem anderen der Teile des Zubehörteils eine Öffnung (121B) zum Aufnehmen der Halterung aufweisen.

25. Zubehörteil gemäß dem vorangehenden Anspruch, bei dem jede Halterung (126) von der Rückseite des Deckels (110) getragen ist und sich senkrecht zu dieser erstreckt und jede Öffnung (121B) im Trägerteil (120) vorgesehen ist.

26. Zubehörteil gemäß einem der vorangehenden Ansprüche, bei dem das Trägerteil auf den beiden transversalen parallelen Seiten wenigstens einen Rand (127C) aufweist, der dazu ausgelegt ist, sich am Rand des freien Endes eines Längsflügels (6) der entsprechenden Einrastleiste des Sockels abzustützen.

27. Zubehörteil gemäß den Ansprüchen 8 und 26, bei dem jeder Rand (127C) durch eine Stufe auf der Innenseite jeder Rippe (127) gebildet ist.

28. Zubehörteil gemäß einem der vorangehenden Ansprüche, bei dem der Deckel (110) entlang wenigstens einer Längsseite einen freitragenden Vorsprung (112) aufweist, der dazu bestimmt ist, einen Querrand eines abgeschnittenen Endes eines in die längs gerichtete Öffnung des Sockels eingebrachten Abschnitts des Deckels abzudecken.

29. Zubehörteil gemäß dem vorangehenden Anspruch, bei dem das Trägerteil (120) auf einer Längsseite, dem Vorsprung (112) des Deckels (110) entsprechend, eine freitragende Plattform (128A) aufweist, die dazu ausgelegt ist, unter dem Querrand des abgeschnittenen Endes des in die längs gerichtete Öffnung des Sockels eingebrachten Abschnitts des Deckels einzugreifen.

30. Zubehörteil gemäß dem vorangehenden Anspruch, bei dem die Plattform (128A) durch die Oberseite eines Trägers (128) gebildet ist, der sich senkrecht zur Längsachse des Trägerteils (120) erstreckt.

31. Zubehörteil gemäß einem der vorangehenden Ansprüche, bei dem das Trägerteil (120) entlang einer Längsseite wenigstens eine Einrastrippe (129A) aufweist.

32. Zubehörteil gemäß dem vorangehenden Anspruch, bei dem das Trägerteil entlang der Längsseite zwei parallele Einrastrippen (129A) aufweist, die zwischen sich eine Längsrille (129B) definieren.

33. Zubehörteil gemäß einem der vorangehenden Ansprüche, bei dem das Trägerteil (120) Mittel zum Anbringen an einem Sockel eines elektrischen Geräts (200) mit direktem Einrasten am Sockel aufweist.

34. Zubehörteil gemäß dem vorangehenden Anspruch, bei dem die Mittel zum Anbringen wenigstens eine Rille (129B) aufweisen.

35. Zubehörteil gemäß dem vorangehenden Anspruch, bei dem jede Rille (129B) entlang einer Längsseite des Trägerteils verläuft.

36. Zubehörteil gemäß dem vorangehenden Anspruch, bei dem die Längsrille (129B) in deren Mitte durch eine andere Querrille (129C) unterbrochen ist.

37. Elektroeinheit, die einerseits ein elektrisches Gerät (200) mit einem Sockel (210), der zwei entgegengesetzte, mit Anbringungsmitteln (213, 214) versehene seitliche Seiten (212) aufweist, und andererseits ein Zubehörteil (100) gemäß einem der Ansprüche 31 bis 36 aufweist, dessen Anbringungsmittel (129A, 129B, 129C) dazu ausgelegt sind, mit den Anbringungsmitteln (213, 214) des Sockels (210) des elektrischen Geräts (200) zusammenzuwirken.

38. Elektroeinheit gemäß dem vorangehenden Anspruch, bei dem die Anbringungsmittel des Sockels des elektrischen Geräts eine auf jeder seitlichen Seite (212) des Sockels (210) vorgesehene Rippe (213) aufweisen.

39. Elektroeinheit gemäß dem vorangehenden Anspruch, bei dem die Rippe (213) die Form eines Kreuzes aufweist.

40. Elektroeinheit, die einerseits einen Kabelkanal mit einem Sockel (1), der eine Längsöffnung (1A) mit zwei Einrastleisten, die dazu ausgelegt sind, ein direktes Anbringen von Zubehörteilen und elektrischen Geräten zu ermöglichen, sowie auf einem inneren Teil des Sockels (1) vorgesehene Festlegungsmittel (10, 6F) aufweist, und andererseits ein Zubehörteil (100) gemäß Anspruch 9 aufweist, das in der Längsöffnung (1A) auf den Einrastleisten des Sockels (1), deren Festlegungsmittel (122B, 123B) dazu ausgelegt sind, mit den Festlegungsmitteln (10, 6F) des Sockels (1) des Kabelkanals zusammenzuwirken, anzubringen ist.

41. Elektroeinheit gemäß dem vorangehenden Anspruch, bei dem die Festlegungsmittel des Sockels (1) Bremsmittel aufweisen, die einen Puffer (10) aus elastischem Material mit hohem Reibungskoeffizienten aufweisen.

42. Elektroeinheit gemäß dem vorangehenden Anspruch, bei dem jeder Puffer (10) in Form eines über die Länge der Einrastleiste vorgesehenen Bandes vorliegt.

43. Elektroeinheit gemäß dem vorangehenden Anspruch, bei dem jede Leiste aus einem elastischen Material über die Länge der Einrastleiste durchgehend ist.

44. Elektroeinheit gemäß Anspruch 42, bei dem jede Leiste aus einem elastischen Material über die Länge der Einrastleiste nicht durchgehend ist.

45. Elektroeinheit gemäß einem der Ansprüche 41 bis 44, bei dem das elastische Material jedes Puffers (10) ein Elastomer wie zum Beispiel ein Polyurethan oder ein Schaumgummi ist.

46. Elektroeinheit gemäß einem der Ansprüche 41 bis 44, bei dem das elastische Material jedes Puffers (10) ein plastisches Harz wie zum Beispiel ein Polyvinylchloridharz ist, dessen Härte zwischen 30 Shore A und 100 Shore A beträgt und vorzugsweise gleich 65 Shore A ist.

47. Elektroeinheit gemäß einem der Ansprüche 41 bis 44, bei dem jeder Puffer (10') eine Oberfläche mit Reliefs aufweist.

48. Elektroeinheit gemäß einem der Ansprüche 41 bis 47, bei dem jedes Einrastband einen Längsflügel (6) aufweist, der unterhalb der Ebene der Längsöffnung liegt, mit einem Zwischenstück (7) an einer nach innen ragenden, mit einer Rückseite einer der Rückführungen (4) verbundenen Längswandung (5) verbunden ist und sich im Inneren des Sockels (1) parallel zu einem längs gerichteten seitlichen Flügel (3) des Sockels erstreckt.

49. Elektroeinheit gemäß dem vorangehenden Anspruch, bei dem der Puffer (10) aus elastischem Material auf einer Außenseite (6A) des Längsflügels (6) der Einrastleiste angeordnet ist.

50. Elektroeinheit gemäß Anspruch 48, bei dem der Puffer (10) aus elastischem Material auf einer Innenseite (6B) des Längsflügels (6) der Einrastleiste angeordnet ist.

51. Elektroeinheit gemäß Anspruch 48, bei dem der Puffer aus elastischem Material auf einer Oberkante (6C) des Längsflügels (6) der Einrastleiste angeordnet ist.

52. Elektroeinheit gemäß Anspruch 48, bei dem der Puffer (10) aus elastischem Material auf einer Unterkante (6E) des Längsflügels (6) der Einrastleiste angeordnet ist.

53. Elektroeinheit gemäß Anspruch 48, bei dem der Puffer (10) aus elastischem Material auf einer Seite (7A) des Zwischenstücks (7) der Einrastleiste angeordnet ist.

54. Elektroeinheit gemäß Anspruch 48, bei dem der Puffer (10) aus elastischem Material auf einer Innenseite (5A) der nach innen ragenden Längswandung (5) des Sockels (1) angeordnet ist.

55. Elektroeinheit gemäß einem der Ansprüche 48 bis 54, bei dem der Längsflügel (6) wenigstens einer Einrastleiste des Sockels (1) wenigstens eine Raste (6F) aufweist, die dazu ausgelegt ist, einen Zapfen des Zubehörteils (100) aufzunehmen.

56. Elektroeinheit gemäß einem der Ansprüche 48 bis 54, bei dem der Längsflügel wenigstens einer Einrastleiste des Sockels wenigstens eine Reihe Riefen aufweist, die dazu ausgelegt sind, mit einer auf dem Zubehörteil vorgesehenen Reihe komplementärer Riefen zusammenzuwirken.

57. Elektroeinheit gemäß einem der Ansprüche 48 bis 54, bei dem der Längsflügel wenigstens einer Einrastleiste des Sockels Wellen aufweist, die dazu ausgelegt sind, mit auf dem Zubehörteil vorgesehenen komplementären Wellen zusammenzuwirken.

## Claims

1. An accessory (100) for fitting through a longitudinal opening of a base (1) of electrical trunking, which accessory comprises two portions, namely a support (120) and a cover (110) for mounting on the support, said support (120) including, on each of its two parallel transverse sides, a tab (122) that, on its outside, carries at least one snap-fastener tooth (123) that is adapted to be snap-fastened on the base, and the support (120) being connected to the rear face of the cover (110) facing towards the support, via a connection arm (124) that presents at least one flexible zone (124A), the accessory being **characterized in that** the connection arm (124) establishes a permanent flexible connection between the cover (110) and at least one tab (122) of said support (120), such that mounting the cover (110) on the support (120) causes the connection arm (124) to deform elastically, which pushes said tab (122) sideways towards the outside of the accessory (100).

2. An accessory according to claim 1, wherein the support (120), the cover (110), and each connection arm (124) form a single monobloc piece that is obtained by molding.

3. An accessory according to any preceding claim, wherein each connection arm (124) is bent.

4. An accessory according to any preceding claim, wherein each connection arm (124) presents reduced thickness (124A) at an end that is connected to said corresponding tab (122) of the support (120).

5. An accessory according to any preceding claim, wherein each tab (122) of the support (120) is connected permanently to the rear face of the cover (110) facing towards the support, via a connection arm (124) that presents at least one flexible zone (124A).

6. An accessory according to any preceding claim, wherein catch means (127) are provided that are distinct from the snap-fastener teeth (123), said catch means being shaped along two parallel transverse sides of the accessory and arranged to co-operate with parallel clipping strips of said base (1) for locally stabilizing the width of said longitudinal opening.

7. An accessory according to the preceding claim, wherein said catch means (127) form part of the support (120).

8. An accessory according to either one of the two preceding claims, wherein, on each of said parallel transverse sides, said catch means comprise a rib (127) that is adapted to be engaged behind a longitudinal flange (6) of the corresponding clipping strip of the base (1), in a longitudinal groove (8) that is formed at the end of a rim (4) of a longitudinal side flange of the base (1).

9. An accessory according to any preceding claim, which accessory includes holding means (122B, 123B) that are shaped to project or be recessed along at least one of the two parallel transverse sides of the accessory, and that are arranged to co-operate with complementary means (10, 10', 6F) provided on/in the base (1), so as to hold said accessory stationary along the longitudinal direction of said base.

10. An accessory according to the preceding claim, wherein the holding means (122B, 123B) form part of the support (120).

11. An accessory according to any one of the two preceding claims, wherein said holding means comprise at least one lug (123B) that is adapted to be engaged with a catch (6F) provided on said base (1).

12. An accessory according to any one of the three preceding claims, wherein said holding means comprise at least one rigid element (122B) that is adapted to be pushed into a pad (10) provided on the base (1), which pad is made of elastic material having a high coefficient of friction.

13. An accessory according to any one of claims 9 to 11, wherein said holding means include at least one pad that is made of elastic material having a high coefficient of friction.

14. An accessory according to the preceding claim, wherein the elastic material of each pad is an elastomer such as polyurethane or foam rubber.

15. An accessory according to claim 13, wherein the elastic material of each pad is a plastics resin such as a polyvinylchloride resin having hardness on the Shore A scale lying in the range 30 to 100, preferably equal to 65.

16. An accessory according to any one of claims 9 to 15, wherein said holding means include at least one series of ridges.

17. An accessory according to any one of claims 9 to 15, wherein said holding means include undulations.

18. An accessory according to any one of claims 9 to 17, wherein said holding means (123B) form part of the snap-fastener teeth (123) of the support (120).

19. An accessory according to any one of claims 9 to 18, wherein said holding means (122B) are carried by an outside face of each tab (122) of the support (120).

20. An accessory according to any one of claims 9 to 17, as dependent on any one of claims 6 to 8, wherein said holding means (127B) form part of said catch means (127).

21. An accessory according to any preceding claim, wherein centering and locking means are provided for centering and locking the cover on the support.

22. An accessory according to the preceding claim, wherein said centering and locking means include firstly on one of the portions of the accessory, at least one snap-fastener tab (125) that carries at least one catch (125A), and secondly on the other of the portions of the accessory, at least one catch edge (121A) for catching said catch carried by said snap-fastener tab.

23. An accessory according to the preceding claim, wherein each snap-fastener tab (125) with a catch is carried by the rear face of the cover (110) and extends perpendicularly thereto, and each catch edge (121A) is provided in said support (120).

24. An accessory according to any one of the three preceding claims, wherein said centering and locking means include, on one of the two portions, at least one tab (126), and on the other of the portions of the accessory, they include an opening (121B) that receives said tab.

25. An accessory according to the preceding claim, wherein each tab (126) is carried by the rear face of the cover (110) and extends perpendicularly thereto, and each opening (121B) is provided in the support (120).

26. An accessory according to any preceding claim, wherein, on said two parallel transverse sides, the support includes at least one rim (127C) that is arranged to bear against the free end edge of a longitudinal flange (6) of the corresponding clipping strip of the base.

27. An accessory according to claims 8 and claim 26, wherein each rim (127C) is formed by a step in the inside face of each rib (127).

28. An accessory according to any preceding claim, wherein the cover (110) includes, cantilevered out, along at least one longitudinal side, an extension (112) for covering a transverse edge of a cut end of a closure segment that is fitted in the longitudinal opening of the base.

29. An accessory according to the preceding claim, wherein the support (120) includes, cantilevered out, on a longitudinal side, in correspondence with the extension (112) of the cover (110), a platform (128A) that is adapted to be engaged below the transverse edge of the cut end of said closure segment that is fitted in the longitudinal opening of the base.

30. An accessory according to the preceding claim, wherein, said platform (128A) is formed by the top face of a beam (128) that extends perpendicularly to the longitudinal axis of the support (120).

31. An accessory according to any preceding claim, wherein, along one longitudinal side, the support (120) includes at least one catch rib (129A).

32. An accessory according to the preceding claim, wherein, along said longitudinal side, said support includes two parallel catch ribs (129A) which define between them a longitudinal groove (129B).

33. An accessory according to any preceding claim, wherein the support (120) includes pairing means for pairing with a base of electrical equipment (200) and for clipping directly on the base.

34. An accessory according to the preceding claim, wherein the pairing means include at least one groove (129B).

35. An accessory according to the preceding claim, wherein each groove (129B) runs along a longitudinal side of the support.

36. An accessory according to the preceding claim, wherein said longitudinal groove (129B) is interrupted at its middle by another groove (129C) that extends transversely.

37. An electrical assembly that comprises firstly electrical equipment (200) that includes a base (210) that presents two opposite side faces (212) that are provided with pairing means (213, 214), and secondly an accessory (100) according to any one of claims 31 to 36 having pairing means (129A, 129B, 129C) that are adapted to co-operate with said pairing means (213, 214) of the base (210) of the electrical equipment (200).

38. An electrical assembly according to the preceding claim, wherein said pairing means of the base of the electrical equipment include a rib (213) that is provided on each side face (212) of the base (210).

39. An electrical assembly according to the preceding claim, wherein said rib (213) presents the shape of a cross.

40. An electrical assembly comprising firstly trunking with a base (1) that presents a longitudinal opening (1A) that is provided with two clipping strips that are suitable for enabling the direct mounting of electrical equipment and accessories, and holding means (10, 6F) that are provided on an inner portion of the base (1), and secondly an accessory (100) according to claim 9 for mounting in said longitudinal open (1A) on the clipping strips of the base (1), having holding means (122B, 123B) that are adapted to co-operate with said holding means (10, 6F) of the base (1) of the trunking.

41. An electrical assembly according to the preceding claim, wherein said holding means of the base (1) include braking means that comprise a pad (10) of an elastic material having a high coefficient of friction.

42. An electrical assembly according to the preceding claim, wherein each pad (10) is in the form of a strip that is provided along the length of said clipping strip.

43. An electrical assembly according to the preceding claim, wherein each strip of an elastic material is continuous along the length of the clipping strip.

44. An electrical assembly according to claim 42, wherein each strip of an elastic material is discontinuous along the length of the clipping strip.

45. An electrical assembly according to any one of claims 41 to 44, wherein the elastic material of each pad (10) is an elastomer such as a polyurethane or a foam rubber.

46. An electrical assembly according to any one of claims 41 to 44, wherein the elastic material of each pad (10) is a plastics resin such as a polyvinylchloride resin having hardness on the Shore A scale lying in the range 30 to 100, preferably equal to 65.

47. An electrical assembly according to any one of claims 41 to 46, wherein each pad (10') includes a surface with portions in relief.

48. An electrical assembly according to any one of claims 41 to 47, wherein each clipping strip includes a longitudinal flange (6) that is situated below the plane of said longitudinal opening and that is attached via a spacer (7) to an inwardly-directed longitudinal wall (5) that is attached to a rear face of one of the rims (4) and that extends inside the base (1) parallel to a longitudinal side flange (3) of the base.

49. An electrical assembly according to the preceding claim, wherein the pad (10) made of elastic material is positioned on an outside face (6A) of the longitudinal flange (6) of said clipping strip.

50. An electrical assembly according to claim 48, wherein the pad (10) made of elastic material is positioned on an inside face (6B) of the longitudinal flange (6) of said clipping strip.

51. An electrical assembly according to claim 48, wherein the pad made of elastic material is positioned on the top tranche (6C) of the longitudinal flange (6) of said clipping strip.

52. An electrical assembly according to claim 48, wherein the pad (10) made of elastic material is positioned on the bottom tranche (6E) of the longitudinal flange (6) of said clipping strip.

53. An electrical assembly according to claim 48, wherein the pad (10) made of elastic material is positioned on a face (7A) of the spacer (7) of said clipping strip.

54. An electrical assembly according to claim 48, wherein the pad (10) made of elastic material is positioned on an inside face (5A) of the inwardly-directed longitudinal wall (5) of the base (1).

55. An electrical assembly according to any one of claims 48 to 54, wherein the longitudinal flange (6) of at least one clipping strip of the base (1) includes at least one catch (6F) that is adapted to receive a lug of said accessory (100).

56. An electrical assembly according to any one of claims 48 to 54, wherein the longitudinal flange of at least one clipping strip of the base includes at least one series of ridges that are adapted to co-operate with a complementary series of ridges that are provided on the accessory.

57. An electrical assembly according to any one of claims 48 to 54, wherein the longitudinal flange of at least one clipping strip of the base includes undulations that are adapted to co-operate with complementary undulations that are provided on the accessory.
